# EUROPEAN PATENT APPLICATION

(11) **EP 2 048 398 A2**
(43) Date of publication of application: **15.04.2009**
(21) Application number: 08164336.3
(22) Date of filing: 15.09.2008
(51) Int. Cl.: F16D 25/061

(54) **A Drive Transfer and Disconnect Device**

(30) Priority: 12.10.2007 GB 0720011
(71) Applicant: Goodrich Control Systems Limited, Solihull, West Midlands B90 4LA (GB)
(72) Inventor: Bomford, Raymond, Chalfont St Peter Bedfordshire SL9 0ET (GB); Harris, Paul, Leighton Buzzard Bedfordshire LU7 2SY (GB)
(74) Representative: Beck, Simon Antony

(57) **Abstract**

A drive transfer and disconnect device comprising a first rotating element (4), a second rotating element (6) in driving engagement with the first rotating element, at least one hydraulic actuator (10, 12) operable to move the second rotating element (6) out of engagement with the first rotating element (4), and a pump (80, 82, 84) for providing pressurised fluid to the actuator, the pump being driven by the second rotating element (6).

## Description

### FIELD OF THE INVENTION

The present invention relates to a drive transfer and disconnect device.

### BACKGROUND OF THE INVENTION

It is known to use a prime mover, such as an aeronautical engine, to drive a load such as an electrical generator. The safety critical nature of aeronautical systems means that in the event of a generator fault, such as loss of lubrication, it is desirable to be able to disconnect the generator from the prime mover.

It is also desirable that such a disconnection should be reliable and, preferably, testable.

### SUMMARY OF THE INVENTION

According to the present invention there is provided a drive transfer and disconnect device comprising a first rotating element, a second rotating element in driving engagement with the first rotating element, at least one hydraulic actuator operable to move the second rotating element out of engagement with the first rotating element, and a pump for selectively providing pressurised fluid to the actuator, the pump being driven by the second rotating element.

It is thus possible to provide a hydraulically operated disconnect device having the pump mounted with the second rotating element, which represents an output from the drive disconnect device. Such an arrangement enables pump wear and heat generation to be much reduced because it is possible to arrange for the pump to be inactive for most of the time.

Preferably the first rotating element is a first shaft and the second rotating element is a second shaft. In this context, shafts may be quite short in their axial direction.

Advantageously the pump is coaxially disposed with the second rotating element. Preferably the pump is disposed around a portion of the second shaft.

Preferably the pump comprises first and second pump parts arranged such that rotational motion of one of the pump parts with respect to the other pump part causes the pump to deliver fluid at a pump output. It can be seen that if both pump parts are allowed to rotate together at the same rate then no fluid is delivered and also that pumped fluid delivery can be initiated by applying a braking force to one of the pump parts such that relative rotation can be induced between the pump parts.

Preferably a first pump part is mounted for rotation with the second rotating element, and the second pump part is co-axial with the first pump part.

Preferably the pump is a gerotor pump and the second rotating element acts as the first pump part, such as an input shaft, for the gerotor pump.

Preferably a pump housing acts as the second pump part and is arranged such that it can rotate with the second element when no pumping action is required, and can also be subjected to a braking force so as to resist rotation of the second element when it is desired to deliver fluid to the actuator. Advantageously a first gerotor pump gear is carried by the second element and a second gerotor pump gear is carried by the pump housing.

In use when the drive transfer and disconnect device is used to transfer drive between a prime mover and a load, no braking force is applied to the pump housing and as a result the first and second gerotor pump gears rotate substantially together and with the input shaft of the pump.

When it is required to operate the drive disconnect device, a braking means is operated to urge the pump housing to stop rotating. The braking means may be a friction brake, such as a brake pad which bears against the pump housing or a band of metal or material which is urged into contact with the pump housing so as to stop it rotating. Additionally or alternatively eddy current effects may be used such that when a magnet is brought to a position adjacent the pump housing or an electromagnet at that position is energised, eddy currents give rise to a braking force.

Advantageously an outer port plate of the gerotor pump may act as the pump housing.

Advantageously a plurality of actuators comprising pistons held within cylinders are disposed in a cylinder block such that actuation of the gerotor pump cause the pistons to extend from the cylinders. The pistons contact a bearing surface, such as a flange, of the output shaft in order to urge it to move to a drive disconnect position.

In a preferred embodiment of the invention a reaction force resulting from contact between the pistons and the flange of the output shaft urges the gerotor pump housing to move axially so as to bring it in to engagement with a non-rotating part of the drive transfer and disconnect device. This engagement further increases the braking force acting on the gerotor pump housing. This in turn leads to an increase in fluid pressure at the pump outlet and hence an increased force being exerted by the pistons.

Advantageously one or more latches are provided, for example in the form of spring loaded fingers or detents, to capture the second rotating element once it has moved to a drive disconnect position and to hold it there until such time as the latch is released. This prevents inadvertent reconnection of the load to the prime mover.

It will be appreciated that drive disconnect events occur very infrequently and for most of the operational life of the device the pump parts are rotating together, and hence there is no relative motion between the gerotor inner and gerotor outer gears and consequently no pump wear or heat generated by churning of hydraulic fluid or lubricant within the pump. This gives rise to a very long in-service life and maintenance interval.

### DESCRIPTION OF THE DRAWINGS

The present invention will be described, by way of non-limiting example only, with reference to the accompanying Figures, in which:
Figure 1 is a cross section through a drive transfer and disconnect device constituting an embodiment of the present invention;
Figure 2 is a cutaway perspective view of the device shown in Figure 1;
Figure 3 schematically illustrates the components of the gerotor pump; and
Figure 4 illustrates the latch mechanism for the drive transfer and disconnect device.

### DESCRIPTION OF PREFERRED EMBODIMENTS OF THE INVENTION

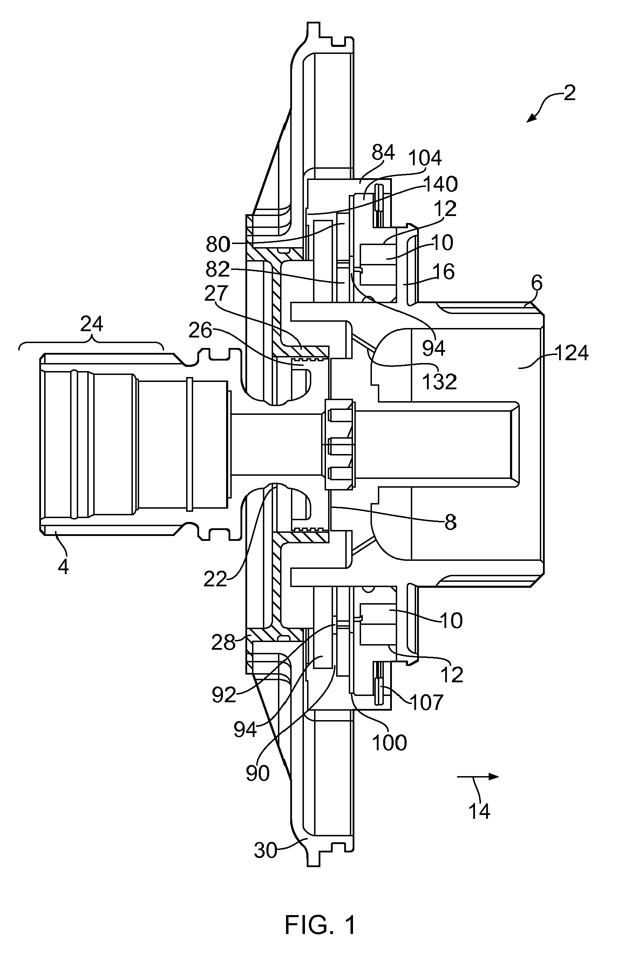

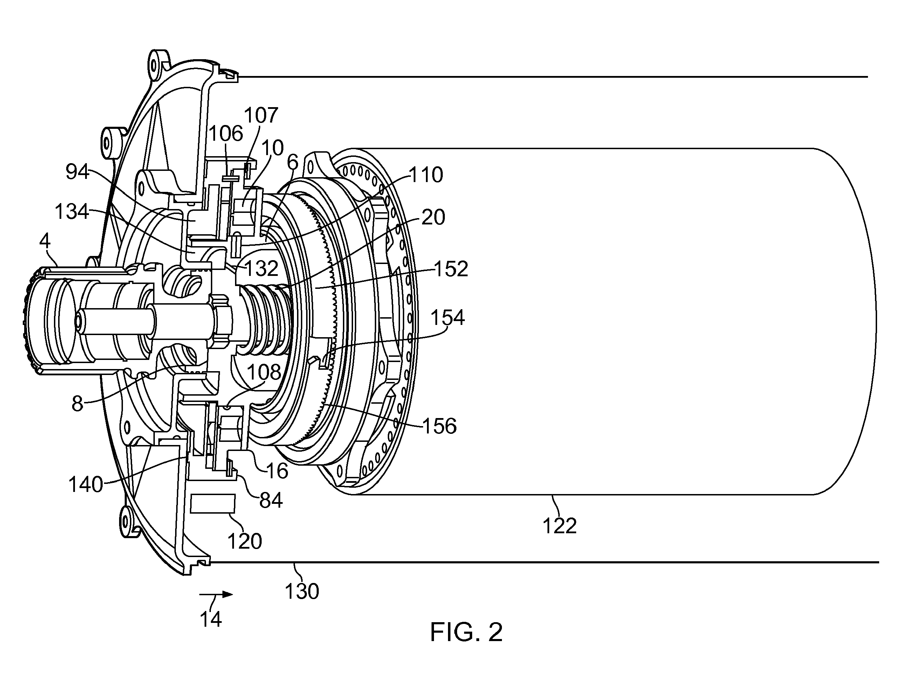

A drive transfer and disconnect device, generally designated 2, is shown in Figures 1 and 2. The device comprises an input shaft 4 which receives torque from a prime mover (not shown) and which transfers torque to an output shaft 6. A dog clutch 8 comprising inter-engaging teeth mechanically couples the input shaft 4 to the output shaft 6 when the drive transfer and disconnect device is in a drive transfer configuration, as shown in Figure 1. The output shaft 6 is axially displaceable away from the input shaft under the action of a plurality of hydraulic actuators formed by pistons 10 held within respective cylinders 12. As will be explained in more detail later, hydraulic pressure can be introduced into the cylinders 12 so as to urge the respective pistons 10 to move in a disengage direction, that is in the direction of the arrow 14 so as to bear against a flange 16 carried by the output shaft 6 and to cause the output shaft 6 to be displaced in the direction of the arrow 14 thereby moving the dogs of the output shaft 6 out of engagement with the dogs of the input shaft 4 such that the output shaft is no longer driven by the input shaft. In use, the output shaft is urged into engagement with the input shaft 4 by a helical compression spring 20 which is omitted from Figure 1, but which is shown in the cutaway perspective diagram of Figure 2. The spring 20 acts against an end face of a rotor 122.

The input shaft 4 has a waist region of reduced thickness disposed between the dog clutch 8 and a splined region 24 that provides mechanical interconnection either directly or indirectly with the prime mover. The waist region forms a shear neck 22 which provides a back up disconnect mechanism in the event of excessive torque.

The input shaft 4 also carries an enlarged head 26 which carries a helical thread which is in close proximity to a wall 27 formed in a non-rotating seal plate 28 carried on a non-rotating drive end cover 30. The thread and wall cooperate to form a windback seal.

The drive transfer device further carries an hydraulic pump for selectively delivering pressurised fluid to the cylinders. In the arrangement shown in Figures 1 and 2 the pump is co-axial with the output shaft 6, and the output shaft of the drive transfer and disconnect device also functions as an input shaft to the hydraulic pump.

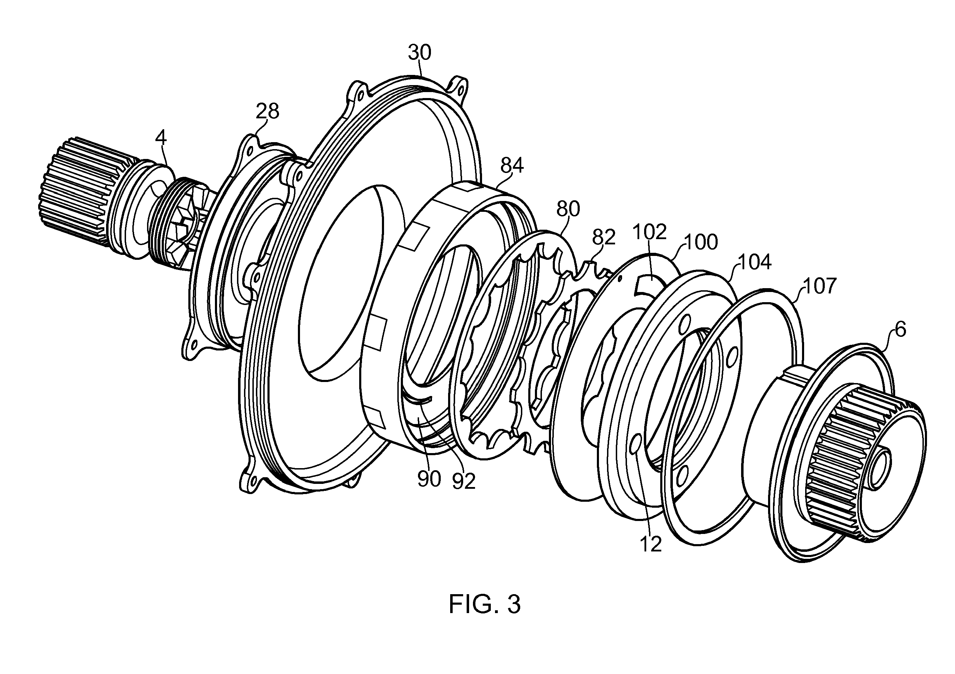

In a preferred embodiment the hydraulic pump is a gerotor pump, which is a pump design well known to the person skilled in the art. Although the design is well known, it will be briefly described with reference to Figure 3 in order to aid the reader. The parts shown in Figure 3 have been axially displaced with respect to each other for clarity. The gerotor pump comprises a gerotor outer gear 80 which meshes with a gerotor inner gear 82. The gears have different numbers of teeth. The inner gear 82 is keyed to the output shaft 6 such that it rotates with the output shaft, whereas the outer gear 80 is keyed to a gerotor outer port plate 84 which in effect defines a housing for the pump. The outer port plate 84 has an internal recess for holding the gerotor outer gear such that the gear is eccentric with respect to the axis of rotation of the input and output shafts. The outer port plate 84 has a flange 90 which has an inlet port 92 cut into it in order to define an inlet for oil that is held in an annular oil reservoir 94. An outlet port plate 100 has an outlet slot 102 cut into it in order to define an outlet port for the gerotor pump. In use the outlet port plate 100 is attached to a circular cylinder block 104 which is concentric with the output element 6. Thus, in normal use, the gerotor inner gear 82 and the gerotor outer gear 80 rotate at the same speed and hence there is no pumping action.

The cylinder block 104 and the outlet port plate 100 are fixed to the outer port plate 84 by a dowel 106, as shown in Figure 2 and a spirolox ring 107. The cylinder block also carries a circular groove 108 on its innermost surface which engages a detent 110 carried by the output shaft. The detent 110 acts to releasably hold the cylinder block axially fixed with respect to the output shaft when the device is at its drive transfer configuration as shown in Figures 1 and 2.

When it is desired to disconnect the drive, a braking device 120 (shown in Figure 2) is operated to apply a braking force to the outer port plate 84. The braking device 120 might be a brake pad or the like which is physically moved into engagement with the gerotor outer port plate 84 under the action of an actuator, which might be electrically or hydraulically controlled. Alternatively, because the gerotor outer port plate 84 will in most instances be made of metal, the braking device 120 may be a magnet, either permanent or electromagnet, which is moved or energised such that the flux from the magnet cuts the metal surface of the outer port plate and thereby gives rise to eddy current braking.

In use, the drive transfer and disconnect device and the rotor 122 connected thereto are enclosed within a housing 130 which is partially shown in Figure 2, and which is closed by the drive end cover 30.

The rotor is lubricated by oil that is introduced into the housing 130 and oil may also be ducted along a central shaft in the rotor. As a consequence a supply of oil is available to the inner region 124 of the output shaft 6 and from there can flow along one or more passages 132 from which it can spill into an annular oil reservoir 94 which functions as an inlet manifold to the gerotor pump. Consequently, a supply of oil is always available for the gerotor pump. In use, the rotor 122 and its associated parts rotate at significant speed such that the annular oil reservoir remains filled due to the centrifugal forces acting on the oil.

The braking force from the braking device 120 causes the gerotor outer port plate 84 and the cylinder block 104 to start to rotate more slowly than the output element 6. This gives rise to a differential rotation speed between the gerotor outer gear 80 and gerotor inner gear 82 and this causes a pumping action by the gerotor pump which causes pressurised fluid to be delivered into the cylinders 12 thereby urging the pistons 10 in the direction of the arrow 14.

Once the pistons 10 engage the flange 16 a reaction force arises which urges the gerotor port plate to move antiparallel to the direction of arrow 14, that is towards the end plate 30.

As pressure builds, the force acting between the pistons 10 and the cylinder block 104 urges the cylinder block 104 and the outer port plate 84 to overcome the action of the detent 110 and to move towards the end plate such that an upstanding wall 140 on the outer port plate abuts the end plate 30. The friction created by this contact slows the rotational speed of the outer port plate 84, giving rise to an increased fluid pressure and hence increase in force exerted by the pistons. It can be seen that a self reinforcing sequence of events is set up which increases the braking force applied to the outer port plate, thereby rapidly bringing it to a halt.

As the force exerted by the piston and cylinders increases, the pressure exerted by the compression spring 20 is overcome and the output shaft translates axially thereby disengaging the dog clutch 8.

The rotor 122 is mounted for rotation within the housing 130 by bearings (not shown) and does not translate axially, consequently a mechanism for allowing the output shaft to drivingly engage the rotor and translate with respect to it needs to be provided. This is easily accomplished by having splines on the output shaft 6 drivingly engage with splines on an input shaft of the rotor.

Once the output shaft 6 is disengaged from the input shaft 4 it rapidly decelerates due to the drag provided by the rotor and hence the pumping action is lost. Consequently a mechanism must be provided to hold the output shaft 6 in its disconnected position.

Different mechanisms can be selected depending on whether the drive transfer and disconnect mechanism is to be easy to reset or not. Thus detents could be provided to capture the drive shaft 6 in the disengaged position or detents within the cylinders could be provided to stop the pistons moving back into the cylinders.

In a preferred embodiment a resetable latch is provided.

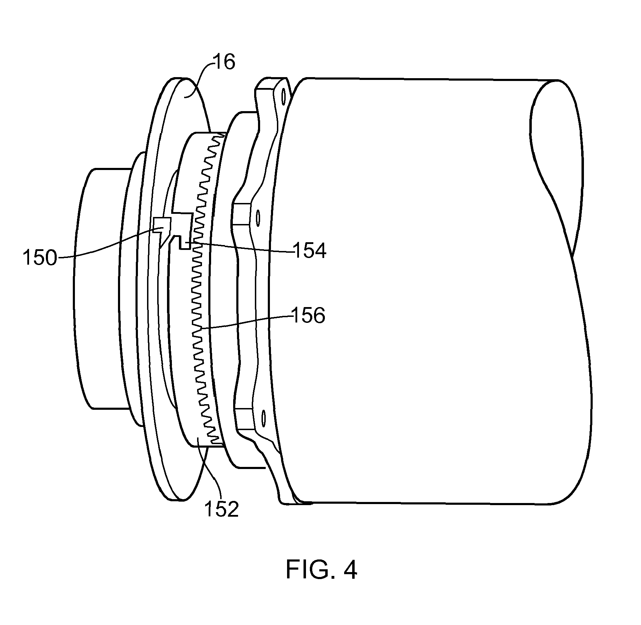

Figure 4 shows a latch mechanism in more detail - and for simplicity has omitted the end housing 30 and the input shaft. As shown in Figure 4 the flange 16 carries a hook 150. A locking collar 152 is mounted for rotation with the output shaft, for example the collar 152 may comprise a first part which is in splined engagement with the output shaft 6 so as to rotate therewith but is held by bearings against movement along the axis of rotation of the output shaft. A second part of the collar 152 is attached to the first part of the collar 152 by a torsion spring such that it can undergo limited rotation with respect to the output shaft. The second part of the collar has a lipped recess 154 formed in it and is aligned with the hook on the flange 16. These parts rotate together so their alignment is maintained.

The hook on the flange has an inclined portion which contacts a cooperating surface on the collar such that as the drive transfer and disconnect device is operated to move the output element to the disengaged position the hook can enter into the recess 154 and become retained therein. The hook 150 remains retained in the recess until a reset operation is performed by maintenance staff to reset the drive transfer and disconnect device. The collar 152 is provided with a toothed periphery 156 such that a cooperating tool can be engaged with the collar to urge it to rotate with respect to the hook to release the hook from the recess 154.

Referring back to Figure 1, it can be seen that a clearance needs to be provided between the wall 140 of the outer port plate 84 of the gerotor pump and the drive end cover 30. In practice, a clearance of approximately 0.5 mm or thereabout has been found to be sufficient to avoid mechanical contact between the outer port plate 84 which normally rotates and the stationary drive end cover.

It will be appreciated that an advantage of this design is that relative movement between the parts of the gerotor pump and the pistons with respect to the flange 16 only occurs in the brief period between initiating the drive disconnect and the output shaft coming to a standstill.

It is thus possible to provide a reliable and robust disconnect mechanism.

## Claims

1. A drive transfer and disconnect device comprising a first rotating element (2), a second rotating element (6) in driving engagement with the first rotating element (2), **characterised by** at least one hydraulic actuator (10, 12) operable to move the second rotating element (6) out of engagement with the first rotating element (2), and a pump for selectively providing pressurised fluid to the at least one actuator, the pump being driven by the second rotating element (6).

2. A drive transfer and disconnect device as claimed in claim 1, **characterised in that** the pump develops an output pressure when a first pump part moves (82) with respect to a second pump part (84), and where the first and second pump parts are rotatable with rotation of the second rotating element (6).

3. A drive transfer and disconnect device as claimed in claim 1 or 2, **characterised by** further including a brake (120) operable to resist rotation of the second pump part (84) when it is desired to disconnect the first (2) and second (6) rotating elements from driving engagement with one another.

4. A drive transfer and disconnect device as claimed in claim 1, 2 or 3, **characterised in that** the pump is a gerotor pump.

5. A drive transfer and disconnect device as claimed in claim 4, **characterised in that** the first pump part is a gerotor inner gear (82), and the second pump part is a gerotor outer gear (80) and outer port plate (84).

6. A drive transfer and disconnect device as claimed in claim 3 or any claim dependent on claim 3, **characterised in that** the brake (120) comprises a mechanical brake, a magnetic brake or an electromagnet brake.

7. A drive transfer and disconnect device as claimed in any of the preceding claims, **characterised by** further comprising a reservoir (94) for fluid in communication with an inlet of the pump.

8. A drive transfer and disconnect device as claimed in any of the preceding claims, **characterised by** further comprising a biasing arrangement (20) for biasing the second rotating element into engagement with the first rotating element.

9. A drive transfer and disconnect device as claimed in any of the preceding claims **characterised by** further comprising a latch (150, 154) for holding the second rotating element (6) in a drive disconnect position.

10. A drive transfer and disconnect device as claimed in any of the preceding claims **characterised in that** the first rotating element (2) is an input shaft which, in use, is connected to a prime mover and the second rotating element (6) is connected directly or indirectly to a rotor.

11. A drive disconnect device as claimed in claim 2, **characterised in that** the second pump part (84) is displaceable in response to operation of the hydraulic actuator (10, 12) to cause it to frictionally engage with a non-rotating element (30) thereby increasing the braking force applied to the second pump part.

12. A drive disconnect device as claimed in any of the preceding claims in combination with a generator or a starter generator.
